# EUROPEAN PATENT SPECIFICATION

(11) **EP 4 162 780 B1**
(45) Date of publication and mention of the grant of the patent: **23.07.2025**
(21) Application number: 22200120.8
(22) Date of filing: 06.10.2022
(51) Int. Cl.: A01B 59/00

(54) **HOOK FOR AGRICULTURAL MACHINE**
KUPPLUNGSHAKEN FÜR EINE LANDWIRTSCHAFTLICHE MASCHINE
CROCHET D'ATTELAGE POUR UNE MACHINE AGRICOLE

(30) Priority: 07.10.2021 IT 202100025625
(43) Date of publication of application: 12.04.2023
(73) Proprietor: ARIES S.r.l., 06019 Umbertide (PG) (IT)
(72) Inventor: Gaggiotti, Leonardo, 06019 Umbertide (PG) (IT) (IT); Amello, David, 06019 Umbertide (PG) (IT) (IT)
(74) Representative: Ercolani, Simone Pietro

(56) References cited:
- EP-A1- 1 604 558
- US-A- 5 050 684

## Description

### FIELD OF THE INVENTION

The present invention concerns a hook for agricultural machine. In particular, such hook is fixed to one of the arms of an agricultural machine lift such as, for example, a tractor.

### KNOWN PRIOR ART

Hooks adapted to automatically accommodate, and to automatically keep locked, the ball joint of an agricultural tool are known in the art.

For example, hooks comprising a main hook-shaped body and provided with a seat for hooking a ball joint, a plug operating within said main body and movable between a first locking position for locking said joint on said seat and a second releasing position for releasing said ball joint from said seat, and outer means to drive the displacement of said plug between said first position and said second position, are known.

For example, the patent EP1604558A1, in the name of Kabushiki Kaisha Delica Matsumoto-shi Nagano-Ken, describes a hook of this type.

Moreover, also the document US5050684, in the name of VOLLMER JUERGEN, describes a hook for agricultural machine. Such coupling hook comprises a housing defining a recess within which a ball for supporting a pin of the tool is accommodated. The hook further comprises a spring-like locking catch. The catch is pivoted around a support pin with clearance in the direction of a first direction connecting the center of the recess to a point of contact between the locking catch and the ball in the recess. The coupling hook further comprises a locking catch which engages the locking catch within a recess thereof such as to define the locking position.

Although extremely efficient in allowing a secure connection of the hook to the ball joint to which it is combined, the solutions of the known art are not devoid of drawbacks.

In fact, whenever the plug of the hook is subjected to a sudden and unexpected force on its front portion, the one in the proximity of the ball joint on which the plug acts, preventing it from coming out of the seat of the main body, the plug could suffer a sudden backward movement. This could cause not only the breaking of the components that are in the hook and, with it, the pins, elastic elements and other components that are in the body of the hook to come out of the body, but also and especially the joint to come out of the seat and, consequently, the tool to be lost. Thus, object of the present invention is to make a hook that is both simple from a structural point of view and that also ensures a greater level of safety compared to the one ensured by the hooks of known art.

Further object of the present invention is to make a hook consisting of the same number of components currently used for the hooks of known agricultural machines, although ensuring a greater degree of safety.

Finally, object of the present invention is to make a hook that is anyhow simple to manufacture and assemble.

### SUMMARY OF THE INVENTION

These and further objects are achieved by means of a hook for agricultural machine according to claim 1, comprising a main hook-shaped body provided with a seat for hooking a ball joint, and a plug operating within said main body and movable between a first locking position for locking said joint on said seat and a second releasing position for releasing said ball joint from said seat, said hook further comprising safety means adapted to prevent the untimely moving back of said plug from said first locking position to said second releasing position in the presence of forces acting on the front end of said plug, said safety means comprising a blind recess obtained inside said main body and a pin directly or indirectly combined with said plug and adapted to come into contact with the inner surface of said blind recess at least when said plug is subjected to said forces acting on its front end such as to assume a third intervention position of said safety means between said first position and said second position, wherein said ball joint is further locked on said seat.

Thanks to the presence of the safety means, it is possible to stop the moving back of the plug which, whenever in the first position and whenever subjected to a sudden force, would be forced to be displaced from the first position such as to reach the second position. Thanks to the solution claimed, not only the breaking of the hook is prevented, but especially the ball joint is prevented from coming out of the seat of the main body and, thus, the tool to which the ball joint is integrally constrained from being lost. In fact, the plug, even if subjected to a sudden force, cannot reach the second position but reaches the aforesaid third position at the limit. However, in such position, the plug still prevents the ball joint from coming out of the hooking seat.

Moreover, the operation of the hook is also ensured whenever some components present inside the hook itself, such as elastic dowels and/or springs, should break. Also in a situation of this type, the ball joint would still be prevented from coming out of its seat.

Still, said hook further comprises outer means to drive the displacement of said plug between said first position and said second position.

Moreover, according to the invention, said drive means comprise a lever pivoted to the back part of said plug around a first axis; the same lever is advantageously operable from the outside of the main body and is pivoted to said main body around a second axis distinct from said first axis.

The first and second axes are advantageously horizontal and, thus, parallel to each other.

It should be noted that the mutual rotation between the lever and the plug occurs around the first, preferably horizontal, axis, whereas the rotation of the lever with respect to the main body occurs around the second, preferably horizontal, axis.

Still, said main body comprises an inner hollow within which said pin of said safety means runs at the switching of said plug from said first position to said second position and vice-versa; said blind recess is arranged at the end of said inner hollow, in the proximity of the position reached by said pin when said plug reaches said first locking position.

Still, said inner hollow is in the shape of an arc of circumference having its center in a point of said second hinge axis for said lever.

Moreover, said blind recess is formed along a direction substantially transversal to said hollow. Particularly, said inner surface of said recess has curvilinear shape whose concavity is opposite that of said inner hollow.

Advantageously, said lever is pivoted to said plug by means of said pin of said safety means.

Such solution allows to reduce the components of the hook according to the solution claimed to the minimum. In fact, the pin of the safety means would be used not only as a catch to prevent the moving back of the plug in the event of sudden forces to which it could be subjected, but also as a pin around which the lever rotates with respect to the plug when switching from the first position to the second position and vice-versa. In practice, the first horizontal axis coincides with the longitudinal axis of such pin.

Always according to the embodiment described herein, the hook comprises elastic means arranged within the main body and adapted to cooperate with the plug and/or with the lever to keep said plug in said first position.

Finally, said drive means comprise an outer handle combined with said lever.

### DESCRIPTION OF THE FIGURES

These and further aspects of the present invention will become clearer in the following detailed description of a preferred embodiment provided herein by way of example only and without limitations, with reference to the accompanying figures, in which:
figure 1 is an axonometric view of a hook according to the invention;
figure 2 is an exploded view of the hook of figure 1;
figure 3A is a longitudinal sectional view of the hook of figure 1 in the position for releasing the plug;
figure 3B is a longitudinal sectional view of the hook of figure 1 in the position for locking the plug;
figure 4A is a further longitudinal sectional view of the hook in the position shown in figure 3B;
figure 4B is a detailed view of figure 4A in which it is possible to see a portion of the hollow present in the main body;
figure 5A is the same hook section shown in figure 4A, in which, however, the plug reaches the intervention position;
figure 5B is a detailed view of figure 5A in which it is possible to see the position reached by the pin within the hollow present in the main body;
figure 6A is a sectional side view of the main body of the hook devoid of the inner components;
figure 6B is an axonometric view of the main body of figure 6A.

### DETAILED DESCRIPTION OF A PREFERRED EMBODIMENT OF THE PRESENT INVENTION

With particular reference to such figures, 1 denotes the hook according to the invention.

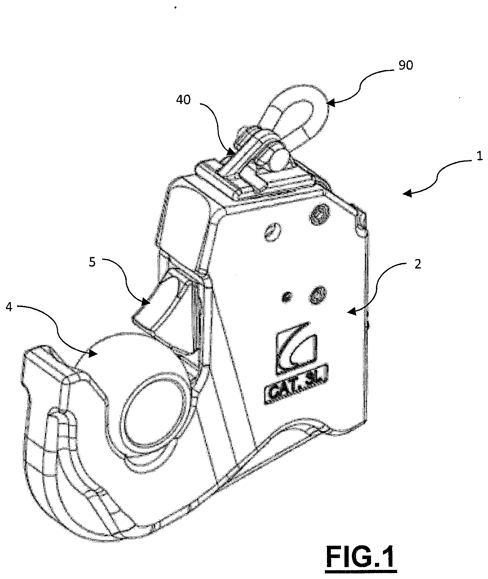

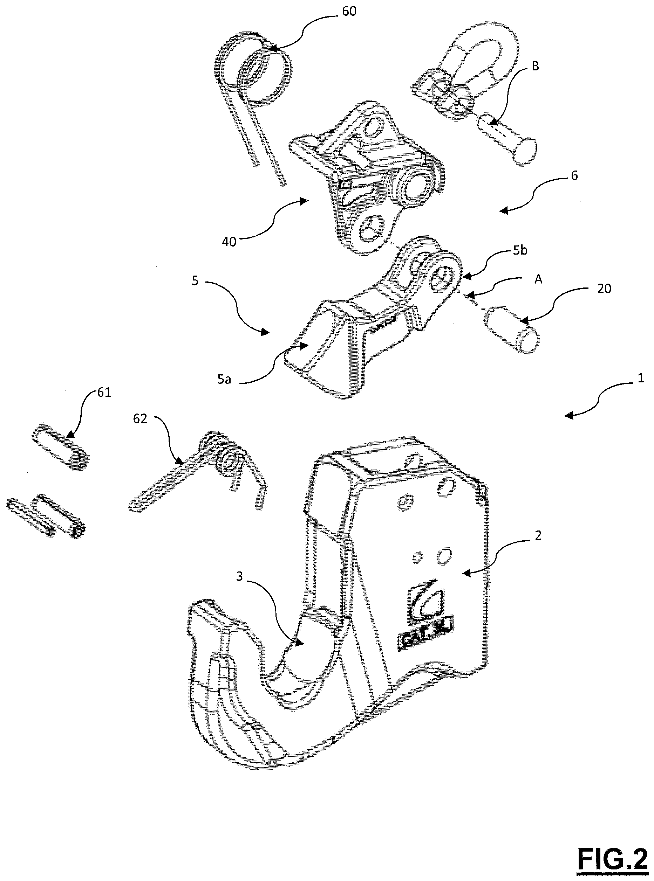

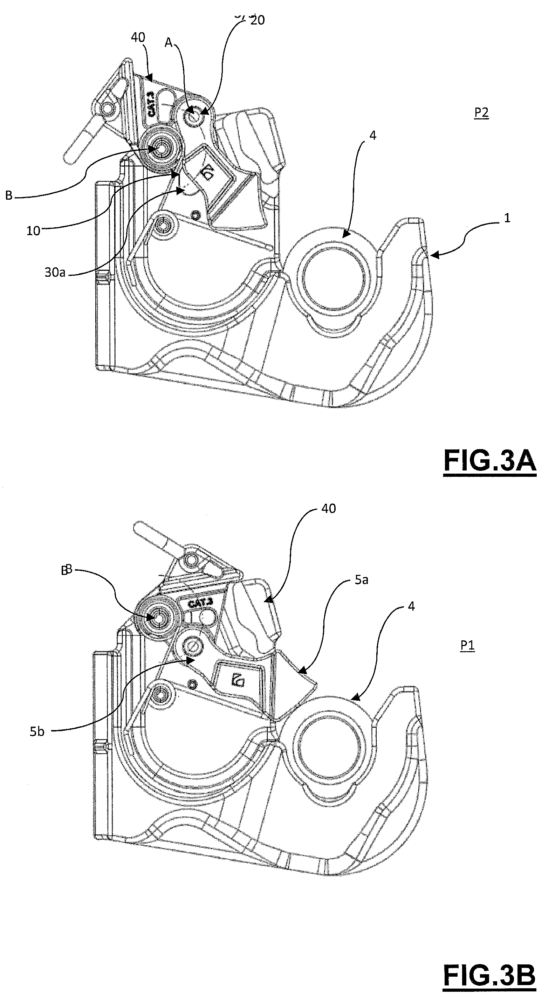

As shown in figures 1, 2, 3A and 3B, the hook 1 for agricultural machine comprises a main hook-shaped body 2 preferably made by hot pressing (forging) and then machined by means of a numerical control machine, provided with a seat 3 for hooking a ball joint 4, and a plug 5 operating within the main body 2 and movable between a first locking position P1 for locking the joint 4 on the seat 3 (see figure 3B) and a second releasing position for releasing the ball joint 4 from the seat 3 (see figure 3A). The hook 1 according to the invention described herein further comprises outer means 6 to drive the displacement of the plug 5 between the first position P1 and the second position P2.

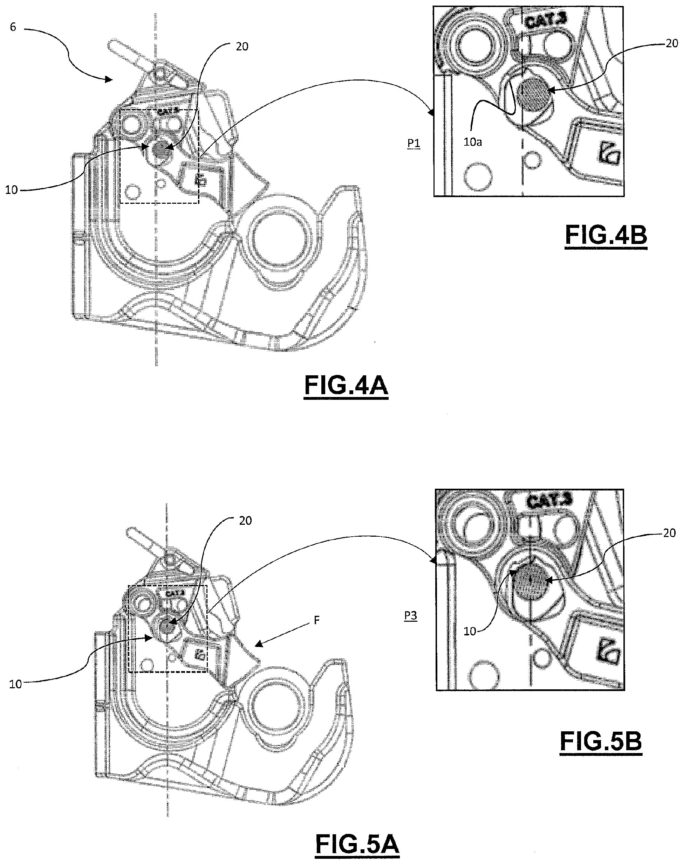

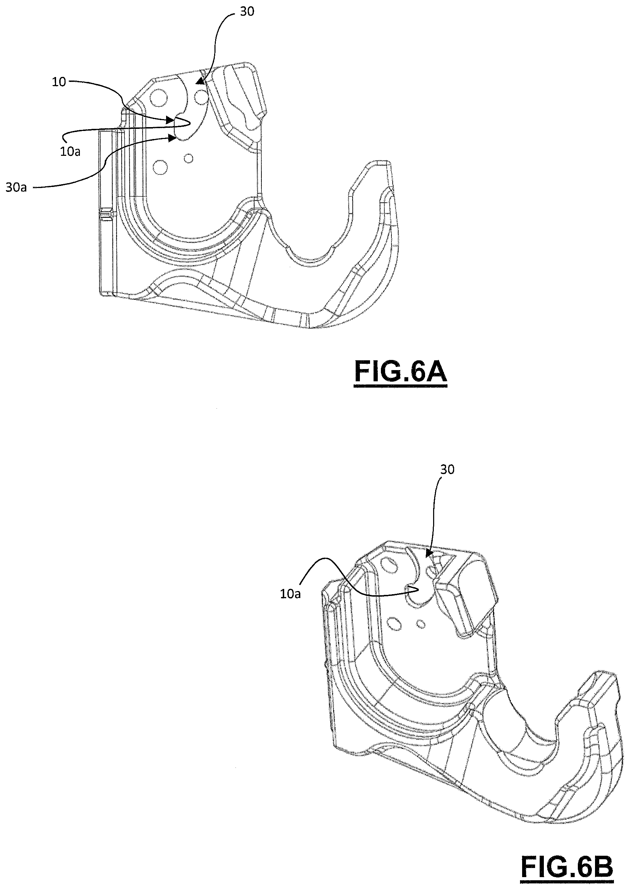

The hook 1 further comprises safety means adapted to prevent the untimely moving back of the plug 5 from the first locking position P1 to the second releasing position P2 in the presence of forces F acting on the front end 5a of the plug 5. Such safety means comprise a blind recess 10 (see figures 6A and 6B) formed inside the main body 2, for example by machining with a numerical control machine, and a pin 20 integral with the plug 5 and adapted to come into contact with the inner surface 10a of the blind recess 10 at least when the plug 5 is subjected to the aforesaid forces F acting on its front end 5a such as to make said safety means assume a third intervention position P3, between the first position P1 and the second position P2 (see figures 5A and 5B). In such third position P3 the plug 5 anyhow further prevents the ball joint 4 from coming out of the seat 3.

The outer drive means 6 comprise a lever 40 pivoted to the upper part 5b of the plug 5 around a first horizontal axis A. Such lever 40 is operable by a user from the outside of the main body 2 and is in turn pivoted to said main body 2 around a second horizontal axis B. The first horizontal axis A is distinct from and parallel to the second horizontal axis B. In practice, the lever 40 is thus rotatably constrained to the plug 5 around the first axis A and is also rotatably constrained to the main body 2 around the second axis B parallel to and distinct from the first axis A.

According to the embodiment described herein, the main body 2 comprises an inner hollow 30 within which the pin 20 of the safety means runs as the plug 5 switches from the first position P1 to the second position P2 and vice-versa. The blind recess 10 is arranged at the end 30a of the inner hollow 30, at the position reached by the pin 20 when the plug 5 reaches the first locking position P1.

In particular, the inner hollow 30 is in the shape of an arc of circumference having its center in a point of the second hinge axis B for the lever 40.

Moreover, the blind recess 10 is formed along a direction substantially transversal to the main direction of the inner hollow 30. Still, the inner surface 10a of the recess 10 has curvilinear shape whose concavity is opposite that of the inner hollow 30. Advantageously, the lever 40 is pivoted to the plug 5 by means of the pin 20 of the safety means. In practice, the pin 20 allows the mutual rotation between the plug 5 and the lever 40.

This allows to considerably reduce the number of components needed to make the hook 1. In fact, the pin 20 is used both as a hinge pin between the plug 5 and the lever 40 and as an element which is used to prevent the backward movement of the plug 5 from its first position P1, whenever unexpected forces F are applied at the front portion 5a of the plug 5.

Still, the hook comprises elastic means arranged within the main body 2 and adapted to cooperate with the plug 5 and, consequently, with the lever 40 to constantly keep the plug 5 in its first locking position P1. Such elastic means comprise a first spring 60, some elastic pins and a second spring 62 which cooperate to prevent the plug 5 from being able to switch from its first locking position P1 to its second releasing position P2. In practice, such elastic means oppose a certain force to the switching from the first position P1 to the second position P2, such as the plug 5, in its initial condition, is always kept in its first position P1.

The user will act on the outer drive means 6, i.e. mainly on the handle 90 of the lever 40, to insert the ball joint 4 at the seat 3, by displacing the plug 5 from its first position P1 to its second position P2. During such displacement, the pin 20 runs within the hollow 30 without interruptions. Once the joint 4 has been inserted into the seat 3, the user releases the handle 90. At this point, the elastic means 60 push the plug 5 in abutment against the ball joint 4. The elastic means are also the ones that prevent the joint 4 from coming out of the seat 3 during the operation of the hook 1.

Finally, the drive means 6 comprise an outer handle 90 combined with the lever 40 to be operated from the outside.

The insertion of the ball joint 4 can also occur without the user acting on the outer drive means 6, i.e. on the handle 90 of the lever 40. In this case, the user pushes the ball joint 4 against the plug 5, thus forcing its displacement from its first locking position to its second releasing position. The ball joint 4 thus displaces the plug 5 such as to obtain the space needed for its access within the hooking seat 3. Once the ball joint 4 has entered, the plug returns to its first locking position P1.

## Claims

1. Hook (1) for agricultural machine, comprising a main hook-shaped body (2) provided with a seat (3) for hooking a ball joint (4), and a plug (5) operating within said main body (2) and movable between a first locking position (P1) for locking said joint (4) on said seat (3) and a second releasing position for releasing said ball joint (4) from said seat (3), said hook (1) further comprising safety means adapted to prevent the untimely moving back of said plug (5) from said first locking position (P1) to said second releasing position (P2) in the presence of forces (F) acting on the front end (5a) of said plug (5), said safety means comprising a blind recess (10) obtained inside said main body (2) and a pin (20) directly or indirectly combined with said plug (5) and adapted to come into contact with the inner surface (10a) of said blind recess (10) at least when said plug is subjected to said forces (F) acting on its front end (5a) such as to assume a third intervention position (P3) of said safety means between said first position (P1) and said second position (P2), wherein said ball joint (4) is further locked on said seat (3), wherein outer means (6) drive the displacement of said plug (5) between said first position (P1) and said second position (P2), and vice-versa, wherein said outer drive means (6) comprise a lever (40) pivoted to the back part (5b) of said plug (5) around a first axis (A), said lever (40) being operable from the outside of said main body and further being pivoted to said main body (2) around a second axis (B), said first axis (A) being distinct from said second axis (B), wherein said lever (40) is pivoted to said plug (5) by means of said pin (20) of said safety means.

2. Hook (1) according to claim 1, **characterized in that** said first axis (A) and said second axis (B) are horizontal.

3. Hook (1) according to one or more of claims 1 to 2, **characterized in that** said main body (2) comprises an inner hollow (30) within which said pin (20) of said safety means runs at the switching of said plug (5) from said first position (P1) to said second position (P2) and vice-versa, said blind recess (10) being arranged in the proximity of the end (30a) of said inner hollow (30), in the proximity of the position reached by said pin (20) when said plug reaches said first locking position (P1).

4. Hook (1) according to claim 3, **characterized in that** said inner hollow (30) is in the shape of an arc of circumference having center coinciding with a point of said second axis (B) for said lever (40).

5. Hook (1) according to claim 3 or 4, **characterized in that** said blind recess (10) is obtained along a direction substantially transversal to said hollow.

6. Hook (1) according to claim 4 or 5 **characterized in that** said inner surface (10a) of said recess (10) has curvilinear shape whose concavity is opposite that of said inner hollow (30).

7. Hook according to one or more of the preceding claims, **characterized by** comprising elastic means (60, 61, 62) arranged within said main body (2) and adapted to cooperate with said plug (5) and/or said lever (40) to keep said plug in said first position.

8. Hook according to one or more of claims 2 to 6, **characterized in that** said drive means comprise an outer handle (90) combined with said lever (40).

## Patentansprüche

1. Haken (1) für landwirtschaftliche Maschine, umfassend einen hakenförmigen Hauptkörper (2), der mit einem Sitz (3) zum Einhaken eines Kugelgelenks (4) versehen ist, und einen Stecker (5), der innerhalb des Hauptkörpers (2) arbeitet und zwischen einer ersten Verriegelungsposition (P1) zum Verriegeln des Gelenkes (4) auf dem Sitz (3) und einer zweiten Freigabeposition zum Lösen des Kugelgelenks (4) vom Sitz (3) verschiebbar ist, wobei der Haken (1) außerdem Sicherheitsmittel umfasst, die dafür angepasst sind, die vorzeitige Rückbewegung des Steckers (5) von der ersten Verriegelungsposition (P1) in die zweite Freigabeposition (P2) zu verhindern, wenn Kräfte (F) auf das vordere Ende (5a) des Steckers (5) wirken, wobei die Sicherheitsmittel eine blinde Vertiefung (10) umfassen, die im Inneren des Hauptkörpers (2) enthalten ist, und einen Stift (20) umfassen, der direkt oder indirekt mit dem Stecker (5) verbunden ist und dazu angepasst ist, mit der inneren Oberfläche (10a) der blinden Vertiefung (10) in Kontakt zu kommen, zumindest wenn der Stecker den Kräften (F) ausgesetzt ist, die auf dessen vorderes Ende (5a) einwirken, sodass eine dritte Eingriffsposition (P3) als Sicherheitsmittel zwischen der ersten Position (P1) und der zweiten Position (P2) eingenommen wird, wobei das Kugelgelenk (4) weiter auf dem Sitz (3) verriegelt ist, wobei äußere Mittel (6) die Verschiebung des Steckers (5) zwischen der ersten Position (P1) und der zweiten Position (P2) und umgekehrt antreiben, wobei die äußeren Antriebsmittel (6) einen Hebel (40) umfassen, der an der Rückseite (5b) des Steckers (5) um eine erste Achse (A) drehbar ist, wobei der Hebel (40) von außerhalb des Hauptkörpers bedienbar ist und zudem um eine zweite Achse (B) am Hauptkörper (2) drehbar ist, wobei sich die erste Achse (A) von der zweiten Achse (B) unterscheidet, wobei der Hebel (40) an dem Stecker (5) mittels des Stiftes (20) der Sicherheitsmittel drehbar ist.

2. Haken (1) nach Anspruch 1, **dadurch gekennzeichnet, dass** die erste Achse (A) und die zweite Achse (B) horizontal sind.

3. Haken (1) nach einem oder mehreren der Ansprüche 1 bis 2, **dadurch gekennzeichnet, dass** der Hauptkörper (2) einen inneren Hohlraum (30) umfasst, in dem der Stift (20) der Sicherheitsmittel bei der Umschaltung des Steckers (5) von der ersten Position (P1) in die zweite Position (P2) und umgekehrt verläuft, wobei die blinde Vertiefung (10) in der Nähe des Endes (30a) des inneren Hohlraums (30) in der Nähe der Position angeordnet ist, die der Stift (20) erreicht, wenn der Stecker die erste Verriegelungsposition (P1) erreicht.

4. Haken (1) nach Anspruch 3, **dadurch gekennzeichnet, dass** der innere Hohlraum (30) die Form eines Bogens einer Kreislinie hat, dessen Mittelpunkt mit einem Punkt der zweiten Achse (B) des Hebels (40) zusammenfällt.

5. Haken (1) nach Anspruch 3 oder 4, **dadurch gekennzeichnet, dass** die blinde Vertiefung (10) entlang einer Richtung erhalten ist, die im Wesentlichen transversal zu dem Hohlraum verläuft.

6. Haken (1) nach Anspruch 4 oder 5, **dadurch gekennzeichnet, dass** die innere Oberfläche (10a) der Vertiefung (10) eine krummlinige Form hat, deren Konkavität des inneren Hohlraums (30) entgegengesetzt ist.

7. Haken nach einem oder mehreren der vorherigen Ansprüche, **dadurch gekennzeichnet, dass** er elastische Mittel (60, 61, 62) umfasst, die innerhalb des Hauptkörpers (2) angeordnet sind und angepasst sind, mit dem Stecker (5) und/oder dem Hebel (40) zusammenzuwirken, um den Stecker in der ersten Position zu halten.

8. Haken nach einem oder mehreren der Ansprüche 2 bis 6, **dadurch gekennzeichnet, dass** die Antriebsmittel einen äußeren Griff (90) umfassen, der mit dem Hebel (40) verbunden ist.

## Revendications

1. Crochet d'attelage (1) pour machine agricole, comprenant un corps principal (2) en forme de crochet muni d'un siège (3) pour l'accrochage d'une rotule (4), et un bouchon (5) fonctionnant à l'intérieur dudit corps principal (2) et mobile entre une première position de verrouillage (P1) pour bloquer ladite rotule (4) sur ledit siège (3) et une seconde position de libération pour libérer ladite rotule (4) dudit siège (3), ledit crochet d'attelage (1) comprenant en outre des moyens de sécurité adaptés pour empêcher le recul intempestif dudit bouchon (5) de ladite première position de verrouillage (P1) à ladite seconde position de libération (P2) en présence de forces (F) agissant sur l'extrémité avant (5a) dudit bouchon (5), ledit moyen de sécurité comprenant un renfoncement aveugle (10) obtenu à l'intérieur dudit corps principal (2) et une goupille (20) directement ou indirectement combinée avec ledit bouchon (5) et adaptée pour venir en contact avec la surface intérieure (10a) dudit renfoncement aveugle (10) au moins lorsque ledit bouchon est soumis auxdites forces (F) agissant sur son extrémité avant (5a) de manière à assumer une troisième position d'intervention (P3) dudit moyen de sécurité entre ladite première position (P1) et ladite seconde position (P2), dans lequel ladite rotule (4) est en outre verrouillée sur ledit siège (3), dans lequel des moyens extérieurs (6) entraîne le déplacement dudit bouchon (5) entre ladite première position (P1) et ladite seconde position (P2), et vice-versa, dans lequel lesdits moyens d'entraînement extérieurs (6) comprennent un levier (40) pivoté sur la partie arrière (5b) dudit bouchon (5) autour d'un premier axe (A), ledit levier (40) pouvant être actionné depuis l'extérieur dudit corps principal et étant en outre pivoté sur ledit corps principal (2) autour d'un second axe (B), ledit premier axe (A) étant distinct dudit second axe (B), dans lequel ledit levier (40) est pivoté sur ledit bouchon (5) au moyen de ladite goupille (20) dudit moyen de sécurité.

2. Crochet d'attelage (1) selon la revendication 1, **caractérisé en ce que** ledit premier axe (A) et ledit second axe (B) sont horizontaux.

3. Crochet d'attelage (1) selon une ou plusieurs des revendications 1 à 2, **caractérisé en ce que** ledit corps principal (2) comprend un creux intérieur (30) à l'intérieur duquel ladite goupille (20) dudit moyen de sécurité circule lors du passage dudit bouchon (5) de ladite première position (P1) à ladite seconde position (P2) et vice-versa, ledit renfoncement aveugle (10) étant disposé à proximité de l'extrémité (30a) dudit creux intérieur (30), à proximité de la position atteinte par ladite goupille (20) lorsque ledit bouchon atteint ladite première position de verrouillage (P1).

4. Crochet d'attelage (1) selon la revendication 3, **caractérisé en ce que** ledit creux intérieur (30) a la forme d'un arc de circonférence dont le centre coïncide avec un point dudit second axe (B) pour ledit levier (40).

5. Crochet d'attelage (1) selon la revendication 3 ou 4 **caractérisé en ce que** ledit renfoncement aveugle (10) est obtenu le long d'une direction sensiblement transversale audit creux.

6. Crochet d'attelage (1) selon la revendication 4 ou 5, **caractérisé en ce que** ladite surface intérieure (10a) dudit renfoncement (10) a une forme curviligne dont la concavité est opposée à celle dudit creux intérieur (30).

7. Crochet d'attelage selon l'une ou plusieurs des revendications précédentes, **caractérisé par** la présence de moyens élastiques (60, 61, 62) disposés à l'intérieur dudit corps principal (2) et aptes à coopérer avec ledit bouchon (5) et/ou ledit levier (40) pour maintenir ledit bouchon dans ladite première position.

8. Crochet d'attelage selon l'une ou plusieurs des revendications 2 à 6, **caractérisé par le fait que** lesdits moyens d'entraînement comprennent une poignée extérieure (90) combinée avec ledit levier (40).
